(19) Europäisches Patentamt
European Patent Office
Office européen des brevets

(11) EP 0 500 815 B1

(12) **EUROPÄISCHE PATENTSCHRIFT**

(45) Veröffentlichungstag und Bekanntmachung des Hinweises auf die Patenterteilung:
**17.05.2000 Patentblatt 2000/20**

(21) Anmeldenummer: **91906188.7**

(22) Anmeldetag: **07.03.1991**

(51) Int. Cl.⁷: **G02F 1/1333**, C09K 19/00, C09K 19/02, C09K 19/30, C09K 19/42

(86) Internationale Anmeldenummer:
**PCT/EP91/00430**

(87) Internationale Veröffentlichungsnummer:
**WO 92/04421 (19.03.1992 Gazette 1992/07)**

(54) **Elektrooptisches Flüssigkristallsystem**
Electro-optical liquid crystal system
Système électro-optique à cristaux liquides

(84) Benannte Vertragsstaaten:
**DE GB**

(30) Priorität: **04.09.1990 DE 4027982**

(43) Veröffentlichungstag der Anmeldung:
**02.09.1992 Patentblatt 1992/36**

(73) Patentinhaber: **MERCK PATENT GmbH**
**64271 Darmstadt (DE)**

(72) Erfinder:
- **FINKENZELLER, Ulrich**
  **D-6831 Plankstadt (DE)**
- **WILHELM, Stefan**
  **D-6100 Darmstadt (DE)**
- **JUBB, Raymond**
  **D-6100 Darmstadt (DE)**

(56) Entgegenhaltungen:

| | |
|---|---|
| **EP-A- 0 313 053** | **EP-A- 0 359 146** |
| **EP-A- 0 409 442** | **EP-A- 0 460 434** |
| **EP-A- 0 460 436** | **WO-A-86/03769** |
| **WO-A-91/05029** | **WO-A-91/12294** |
| **DE-A- 3 200 967** | **DE-A- 4 005 869** |

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Xerox (UK) Business Services
2.16.7 (HRS)/3.6

## Beschreibung

Die Erfindung betrifft ein elektrooptisches Flüssigkristallsystem,

- welches zwischen 2 Elektroden, die gegebenenfalls auf Substratplatten aufgebracht sind, eine dielektrisch positive Flüssigkristallmischung und ein weiteres optisch transparentes Medium enthält,
- dessen Flüssigkristallmoleküle im ausgeschalteten Zustand eine unregelmäßige Orientierung aufweisen,
- bei dem einer der Brechungsindizes der Flüssigkristallmischung im wesentlichen mit dem Brechungsindex der Matrix $n_M$ übereinstimmt und/oder bei dem der Quotient aus der Masse der Flüssigkristallmischung und der Masse des optisch transparenten Mediums 1,5 oder mehr beträgt,
- welches in einem der beiden Schaltzustände unabhängig von der Polarisation des einfallenden Lichtes eine gegenüber dem anderen Zustand verminderte Transmission aufweist,
  dadurch gekennzeichnet, daß die Flüssigkristallmischung auf einzelnen Flüssigkristallverbindungen basiert, die eine mittlere Doppelbrechung

$$0.09 \leq \Delta n \leq 0.20 \ (20\ ^\circ C, 589\ nm)$$

aufweisen, daß der Massenanteil dieser Flüssigkristallverbindungen an der Flüssigkristallmischung mehr als 80 % beträgt und der Massenanteil an Flüssigkristallverbindungen welche eines der folgenden Strukturelemente (1) - (9)

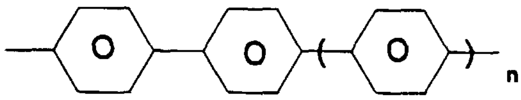

(1)

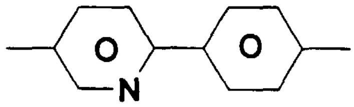

(2)

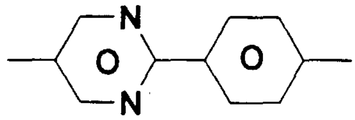

(3)

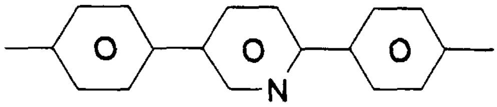

(4)

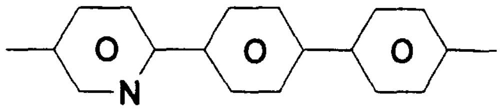

(5)

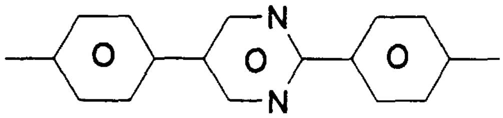

(6)

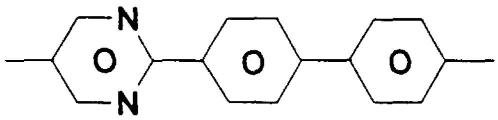

(7)

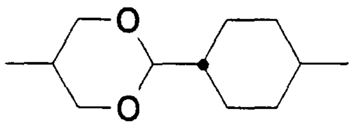

(8)

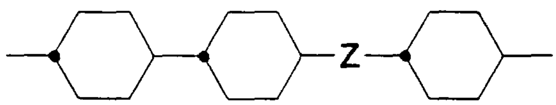

(9)

aufweisen, worin n 0 oder 1 und Z -COO-, -OCO-, $-CH_2O-$ oder $-C_2H_4$ bedeuten, an den Flüssigkristallmischungen kleiner als 10 % ist.

Das optisch transparente Medium kann voneinander abgegrenzte Flüssigkristall-Mikrotröpfchen enthalten oder ein schwammartiges, 3-dimensionales Netzwerk bilden, in dessen Poren, die in mehr oder weniger starkem Ausmaß ineinander übergehen, sich die Flüssigkristallmischung befindet. Durch den Ausdruck Flüssigkristall-Mikrotröpfchen werden kleine, voneinander abgegrenzte Flüssigkristallkompartimente gekennzeichnet, die jedoch keineswegs eine kugelförmige Gestalt aufweisen müssen, sondern unregelmäßig geformt und/oder deformiert sein können.

Enthält das optisch transparente Medium Flüssigkristall-Mikrotröpfchen, wird es im folgenden als Matrix bezeichnet; liegt dagegen eine schwammartige, 3-dimensional vernetzte Struktur vor, wird das Medium durch den Ausdruck Netzwerk charakterisiert.

NCAP- und PDLC-Filme (NCAP = nematic curvilinear aligned phases, PDLC = polymer dispersed liquid crystal), wie unter anderem in den nicht vorveröffentlichten EP 0 409 442 und WO 91/05029 beschrieben, sind Beispiele für elektrooptische Flüssigkristallsysteme, bei denen die Flüssigkristallmischung in Form von Mikrotröpfchen in die Matrix eingebettet ist. NCAP-Filme werden gewöhnlich dadurch erhalten, daß das verkapselnde polymere Material, wie z.B. Polyvinylalkohol, die Flüssigkristallmischung und ein Trägermaterial, wie z.B. Wasser, in einer Kolloidmühle innig vermischt werden. Anschließend wird das Trägermaterial z.B. durch Trocknung entfernt. Ein entsprechendes Verfahren ist in US 4,435,047 beschrieben. Dagegen wird bei der z.B. in EP 0,272,585 und US 4,688,900 beschriebenen Herstellung von PDLC-Filmen die Flüssigkristallmischung zunächst mit Monomeren oder Oligomeren des matrixbildenden Materials homogen vermischt. Anschließend wird die Mischung polymerisiert und die Phasentrennung induziert, wobei zwischen TIPS (temperature-induced phase separation). SIPS (solvent-induced phase separation) und PIPS (polymerization-induced phase separation) unterschieden wird (Mol. Cryst. Liq. Cryst. Inc. Nonlin. Opt. 157 (1988) 427).

Das in EP 0,313,053 sowie auch in EP 0 359 146 beschriebene PN-System (PN = Polymer Network) weist eine schwammartige Netzwerkstruktur des optisch transparenten Mediums auf. Der Anteil der Flüssigkristallmischung an der Masse der lichtmodulierenden Schicht ist im allgemeinen größer als 60 % und liegt insbesondere zwischen 70-90 %. Zur Herstellung der PN-Systeme wird üblicherweise eine Mischung aus der Flüssigkristallmischung. Monomeren oder Oligomeren des das 3-dimensionale Netzwerk bildenden Materials und ein Polymerisationsinitiator. insbesondere ein Photoinitiator, zwischen 2 mit Elektroden versehene Substratplatten gebracht und dann z.B. durch Lichteinstrahlung polymerisiert.

Die nicht vorveröffentlichten EP 0 460 434, EP 0 460 436 und WO 91/12294 beschreiben Flüssigkristallmischungen. EP 0 460 436 beschreibt die Anwendung der Flüssigkristallmischungen in STN-Anzeigen.

Die Flüssigkristallmischung hat im allgemeinen eine positive dielektrische Anisotropie $\Delta\varepsilon$; weiterhin werden bislang Flüssigkristallmischungen verwendet, die eine mittlere bis hohe optische Anisotropie aufweisen. Bei Mikrotröpfchen-Matrix-Systemen wird einer der Brechungsindices der Flüssigkristallmischung, üblicherweise der ordentliche Brechungsindex $n_o$ so gewählt, daß er mit dem Brechungsindex $n_M$ der polymeren Matrix mehr oder weniger zusammenfällt. Bei Netzwerk-Systemen ist eine Anpassung der Brechungsindizes wegen des üblicherweise sehr viel höheren Flüssigkristallanteils an der lichtmodulierenden Schicht nicht unbedingt erforderlich, kann aber zur Erhöhung des Lichtdurchsatzes und des Kontrates vorgenommen werden.

Man beobachtet an diesen elektrooptischen Flüssigkristall-Systemen einen elektrisch schaltbaren Lichtstreuungseffekt. Ist keine Spannung an die Elektroden, zwischen denen die Matrix bzw. das Netzwerk üblicherweise sandwichartig angeordnet ist, angelegt, wird auftreffendes Licht an den statistisch ausgerichteten Flüssigkristallmolekülen stark gestreut, das System ist undurchsichtig. Beim Anlegen einer Spannung werden die Flüssigkristallmoleküle parallel zum Feld und senkrecht zum E-Vektor des hindurchgehenden Lichts ausgerichtet.

Bei Mikrotröpfchen-Matrix-Systemen sieht senkrecht auftreffendes Licht wegen der Anpassung von $n_0$ und $n_M$ ein optisch isotropes Medium und das System erscheint durchsichtig. Eine Anpassung ist erforderlich, um eine Streuung des Lichts an der Phasengrenze Matrix/Flüssigkristalltröpfchen zu vermeiden. In EP 0 272 585 ist eine andere Ausführungsform beschrieben, bei der der Brechungsindex $n_x$, den der Flüssigkristall bei vollständig statistischer Orientierung aufweist, an den Brechungsindex der Matrix $n_M$ angepaßt ist. In diesem Fall ist das System im feldfreien Zustand durchsichtig, und es wird durch Anlegen einer Spannung in den opaken Zustand überführt.

Bei Netzwerk-Systemen ist eine Anpassung der Brechungsindizes nicht unbedingt erforderlich, da wegen des hohen Flüssigkristallanteils an der Masse der lichtmodulierenden Schicht die Streuung an der Phasengrenze Netzwerk-Flüssigkristall offensichtlich weniger stark ist. Das System erscheint im eingeschalteten Zustand auch ohne Anpassung der Brechungsindizes durchsichtig. Bei Netzwerksystemen ist zur Erzielung einer möglichst geringen Transmission im nicht geschalteten Zustand die Verwendung von Flüssigkristallmischungen mit hoher optischer Anisotropie $\Delta n$ bevorzugt.

Die beschriebenen elektrooptische Flüssigkristallsysteme sind vor allem für großflächige Anzeigensysteme, für architektonische Anwendungen (Fenster, Raumteiler, Sonnendächer etc.) und für Kraftfahrzeuge (Fenster, Sonnendächer etc.) vorgeschlagen worden, wobei sich diese Systeme auch zur Temperaturregulierung durch gesteuerte Abschirmung der Sonnenstrahlung eignen. Sie können durch Anlegen einer Gleich- oder Wechselspannung geschaltet werden.

Da diese Systeme insbesondere auch für "outdoor"-Anwendungen vorgesehen sind, werden Flüssigkristallmischungen benötigt, die durch einen hohen Klärpunkt, weiten nematischen Bereich und eine hohe UV- und Temperaturstabilität gekennzeichnet sind.

Weitere Anwendungen sind zum Beispiel:

- GH-Anzeigen-Systeme, wobei das Spektrum über einfache Segmentanzeigen bis zu Displays reicht, auf die mit herkömmlichen Drucktechniken beliebige Elektrodenmuster aufgebracht werden können. Anwendungen: Kraftfahrzeug, Großanzeigen, Werbeflächen, Uhren

- Matrixdisplays mit hohem Informationsgehalt

- Projektionssysteme

- Schalter.

Auch hier werden Flüssigkristallmischungen mit insbesondere hohem $\Delta\varepsilon$ und hohem elektrischen Widerstand benötigt.

In Mikrotröpfchen-Matrix-Systemen werden bisher üblicherweise LC-Mischungen eingesetzt, die aus Alkyl- oder Alkoxycyanobiphenylen und -terphenylen bestehen. So wird in US 4,688,900 und in EP 0,272,585 die Flüssigkristallmischung E 8 und in US 4, 671, 618 die Flüssigkristallmischung E 7 (beide Mischung sind Handelsprodukte von BDH, Poole, Great Britain) verwendet.

In EP 0,313,053 werden für Netzwerk-Systeme Flüssigkristallmischungen vorgeschlagen, die auf 2-(4-Cyanophenyl)pyridinen basieren.

Diese Flüssigkristallmischungen erfüllen die Forderungen nach einem weiten nematischen Bereich, einem hohen Klärpunkt, einer sehr hohen Stabilität, einer Abwesenheit smektischer Phasen bis zu tiefen Temperaturen, vorteilhaften Werten für $\Delta n$ und Fließviskosität $\eta$ und einem hohen $\Delta\varepsilon$ nur unzureichend.

Nachteilig ist häufig insbesondere, daß die Flüssigkristallmischungen bzw. einzelne Komponenten der Flüssigkristallmischungen vielfach durch eine zu hohe und/oder deutlich temperaturabhängige Löslichkeit im matrix- bzw. netzwerkbildenden Polymer gekennzeichnet sind. Wenn sich z. B. die Löslichkeit einer oder einiger Komponenten einer Flüssigkristallmischung mit steigender Temperatur ändert, kann dies zwar einerseits die Phasentrennung erleichtern; andererseits kann es jedoch zu einer deutlichen Beeinflussung physikalischer Eigenschaften der Mischung und insbesondere auch der Brechungsindices $n_e$ und $n_o$ kommen, wodurch die Anpassung von $n_o$ bzw. $n_e$ oder eines anderen Brechungsindexes der Flüssigkristallmischung an $n_M$ und damit die optischen Eigenschaften des Systems verschlechtert werden.

Daneben weisen die bisherigen Flüssigkristalle häufig eine zu geringe Mischbarkeit mit den Monomeren und/oder Oligomeren des zur Bildung der Matrix bzw. des Netzwerks verwendeten Polymers auf, was die Herstellung von PN-Systemen erheblich beeinträchtigt und bei Mikrotröpfchen-Matrix-Systemen insbesondere die Anwendung der PIPS-Technologie erheblich beschränkt. Ein weiterer Nachteil der bisherigen Flüssigkristalle besteht häufig darin, daß die Flüssigkristallmischung für die jeweilige Anwendung ungünstige Werte der elektrooptischen Parameter wie z.B. der Steilheit der elektrooptischen Kennlinie und/oder der Temperaturabhängigkeit der elektrooptischen Parameter wie z.B. der Schwellenspannung zeigt.

Es besteht somit immer noch ein großer Bedarf an Flüssigkristallmischungen und mit diesen befüllten elektrooptischen Systemen, die den entsprechenden Anforderungen besser gerecht werden und die geschilderten Nachteile nicht oder nur in geringerem Umfang aufweisen.

Der Erfindung lag die Aufgabe zugrunde Flüssigkristallmischungen bereitzustellen, die die angeführten Nachteile herkömmlicher Systeme nicht oder nur im geringen Maße aufweisen, und die insbesondere durch eine geringere Löslichkeit und/oder Temperaturabhängigkeit der Löslichkeit der Flüssigkristallmischung bzw. einer oder einiger Komponenten der Flüssigkristallmischung in dem Matrixmaterial gekennzeichnet sind.

Es wurde nun gefunden, daß diese Aufgabe durch die Bereitstellung von Flüssigkristallmischungen gelöst werden kann, die auf einzelnen Flüssigkristallverbindungen basieren. welche eine mittlere Doppelbrechung

$$0{,}09 \leq \Delta n \leq 0{,}20 \ (20\ ^\circ\mathrm{C},\ 589\ \mathrm{nm})$$

aufweisen.

Gegenstand der Erfindung ist somit ein elektrooptisches Flüssigkristallsystem,

- welches zwischen 2 Elektroden, die gegebenenfalls auf Substratplatten aufgebracht sind, eine dielektrisch positive Flüssigkristallmischung und ein weiteres optisch transparentes Medium enthält,

- dessen Flüssigkristallmoleküle im ausgeschalteten Zustand eine unregelmäßige Orientierung aufweisen,

- bei dem einer der Brechungsindizes der Flüssigkristallmischung im wesentlichen mit dem Brechungsindex der Matrix $n_M$ übereinstimmt und/oder bei dem der Quotient aus der Masse der Flüssigkristallmischung und der Masse des optisch transparenten Mediums 1,5 oder mehr beträgt,

- welches in einem der beiden Schaltzustände unabhängig von der Polarisation des einfallenden Lichtes eine gegenüber dem anderen Zustand verminderte Transmission aufweist,
  dadurch gekennzeichnet, daß die Flüssigkristallmischung auf einzelnen Flüssigkristallverbindungen basiert, die eine mittlere Doppelbrechung

$$0.09 \leq \Delta n \leq 0.20 \ (20\ ^\circ C,\ 589\ nm)$$

aufweisen, daß der Massenanteil dieser Flüssigkristallverbindungen an der Flüssigkristallmischung mehr als 80 % beträgt und der Massenanteil an Flüssigkristallverbindungen welche eines der folgenden Strukturelemente (1) - (9)

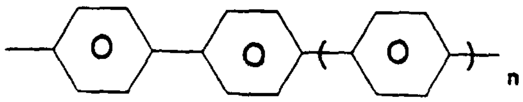
(1)

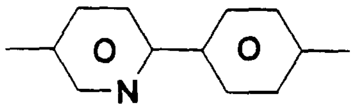
(2)

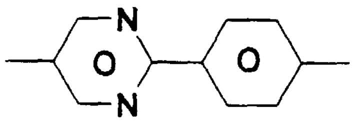
(3)

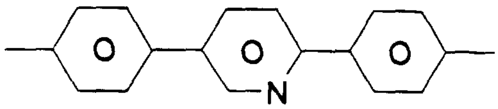
(4)

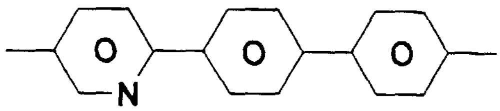
(5)

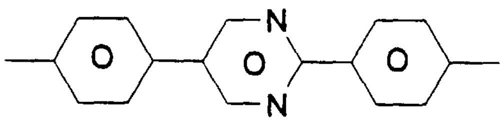
(6)

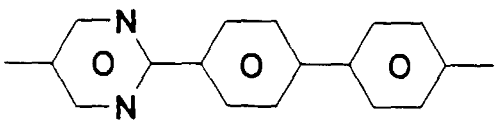
(7)

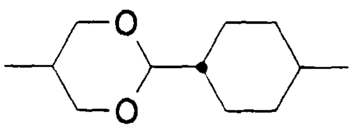
(8)

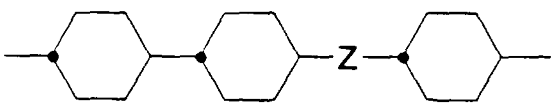
(9)

aufweisen, worin n 0 oder 1 und Z -COO-, -OCO-, $-CH_2O-$ oder $-C_2H_4$ bedeuten, an den Flüssigkristallmischungen kleiner als 10 % ist.

Der Aufbau der erfindungsgemäßen elektrooptischen Flüssigkristallsysteme entspricht der für derartige Systeme üblichen Bauweise. Der Begriff übliche Bauweise ist hierbei weit gefaßt und umschließt alle Abwandlungen und Modifikationen.

So ist z.B. bei PDLC- oder NCAP-Filmen die von dem durchsichtigen Medium gebildete Matrix, in der die Flüssigkristallmischung mikrodispergiert oder mikroverkapselt ist, sandwichartig zwischen leitenden Elektroden angeordnet.

Die Elektroden sind i.a. auf Substratplatten aus z.B. Glas, Kunststoff o.ä. aufgebracht; ggf. kann die Matrix jedoch auch direkt mit Elektroden versehen werden, so daß auf die Verwendung von Substraten verzichtet werden kann.

Bei Netzwerk-Systemen befindet sich der Flüssigkristall in den Poren des schwammartigen, 3-dimensionalen Netzwerks. Das Netzwerk ist üblicherweise zwischen mit Elektroden versehenen Substraten angeordnet, um ein Entweichen der Flüssigkristallmischung zu verhindern.

Sowohl PN-Systeme als auch Mikrotröpfchen-Matrix-Systeme können reflektiv oder transmissiv betrieben werden, so daß mindestens eine Elektrode und, falls vorhanden, das zugehörige Substrat durchsichtig sind. Beide Systeme enthalten üblicherweise keine Polarisatoren, wodurch ein deutlich höherer Lichtdurchsatz resultiert. Weiterhin sind keine Orientierungsschichten erforderlich, was eine erhebliche technologische Vereinfachung bei der Herstellung dieser Systeme verglichen mit herkömmlichen Flüssigkristallsystemen wie z.B. TN- oder STN-Zellen bedeutet.

Die Matrix bzw. das 3-dimensionale Netzwerk basieren insbesondere auf isotropen Thermoplasten, Duroplasten und Elastomeren. Die erhaltenen Systeme können je nach beabsichtigter Verwendung flexibel, elastisch oder starr sein.

Ein auf einem thermoplastischen Polymer basierendes System kann bei Temperaturen, die größer als die Glastemperatur der Matrix sind, leicht durch Einwirken einer mechanischen Spannung deformiert werden. Dies kann z.B. bei Mikrotröpfchen-Matrix-Systemen dazu benutzt werden, um eine gezielt deformierte Form der Tröpfchen durch Abkühlen der Matrix auf Temperaturen unterhalb der Glastemperatur einzufrieren.

Während flexible und/oder elastische Systeme bevorzugt auf Thermoplasten und/oder Elastomeren basieren, werden zur Herstellung starrer Systeme bevorzugt duroplastische Polymere verwendet. Diese können während des Aushärtens mechanisch verformt werden, wobei in der ausgehärteten Matrix z.B. die Form und Anordnung der Mikrotröpfchen fixiert ist.

In WO 89/06 264 ist ein Copolymerisat aus einem multifunktionellen Acrylat und einem multifunktionellen Mercaptan als Matrixmaterial zur Verringerung der Löslichkeit der Flüssigkristallmischung in der Matrix vorgeschlagen worden. Nach unseren Untersuchungen kann die Löslichkeit und/oder die Temperaturabhängigkeit der Löslichkeit der Flüssigkristallmischung in der Matrix durch die Variation des Matrixmaterials nur innerhalb gewisser Grenzen beeinflußt werden; entscheidend für ein vorteilhaftes Löslichkeitsverhalten ist vielmehr, daß der Flüssigkristall weitgehend optisch homogen ist, d. h. auf Verbindungen mit mittlerer optischer Anisotropie $0{,}09 \leq \Delta n \leq 0{,}20$ basiert.

Zur Herstellung der Matrix bzw. des Netzwerks werden vzgsw. z. B. die in US 3,935,337, US 4,688,900, US 4,671,618, US 4,673,255, US 4,435,047, EP 0,313,053, EP 0,359,146 und EP 0,272,585 genannten Polymere verwendet. Daneben können aber auch andere, dem Fachmann bekannte Polymere sowie weitere durchsichtige Materialien wie z.B. anorganische oxidische Glasmonolithe (US 4,814,211), weitere anorganische Materialien (s. z.B. Japanische Offenlegungsschrift 303325/1988) oder auch andere Materialien verwendet werden.

Bevorzugte Ausführungsform der erfindungsgemäßen elektrooptischen Flüssigkristallsysteme sind NCAP-Filme, PDLC-Filme und nach modifizierten Verfahren hergestellte Mikrotröpfchen-Matrix-Systeme. Verfahren zur Herstellung dieser Filme sind z.B. in US 3,935,337, US 4,688,900, US 4,673,255, US 4,671,618, US 4,435,047 und EP 0,272,585 angegeben.

Eine weitere bevörzugte Ausführungsform der erfindungsgemäßen elektrooptischen Systeme sind die Netzwerk-Systeme, deren Herstellung in EP 0,313,053 und EP 0,359,146 beschrieben ist.

Neben den obengenannten speziellen Ausgestaltungen der erfindungsgemäßen Systeme sind aber auch solche Ausführungsformen der Erfindung umfaßt, bei denen das transparente Medium eine Struktur aufweist, die zwischen der Netzwerkstruktur auf der einen Seite und der Mikrotröpfchen-Matrix-Konfiguration auf der anderen Seite liegt.

Zu den erfindungsgemäßen elektrooptischen Systeme zählen auch "inverse Mikrotröpfchen-Matrix-Konfigurationen", bei denen das transparente Medium in Form von einzelnen z.B. kugelförmigen Teilchen in dem Flüssigkristall dispergiert ist. Eine derartige Anordnung ist z.B. in GB 1,442,360 beschrieben.

Die Dicke d der elektrooptischen Systeme d wird üblicherweise klein gewählt, um eine möglichst niedrige Schwellenspannung $V_{th}$ zu erzielen. So werden z.B. in US 4,435,047 Schichtdicken von 0,8 und 1,6 mm berichtet, während für die Schichtdicke in US 4, 688, 900 Werte zwischen 10 µm und 300 µm und in EP 0,313,053 zwischen 5 µm und 30 µm angegeben werden. Die erfindungsgemäßen elektrooptischen Systeme weisen nur in Ausnahmefällen Schichtdicken d auf, die deutlich größer sind als einige mm; bevorzugt sind Schichtdicken $d \leq 2$ mm.

Die Schwellenspannung wird auch von der Größe der Mikrotröpfchen bzw. der Maschenweite des Netzwerks beeinflußt. Allgemein gilt, daß kleinere Mikrotröpfchen eine höhere Schwellenspannung $V_{th}$, jedoch kürzere Schaltzeiten $t_{on}$ bzw. $t_{off}$ bewirken (US 4,673,255). Experimentelle Verfahren zur Beeinflussung der mittleren Tröpfchengröße sind z.B. in US 4,673,255 und in J.L. West, Mol. Cryst. Liq. Cryst. Inc. Nonlin. Opt., 157 (1988) 427 beschrieben. In US 4,673,255 werden mittlere Tropfendurchmesser zwischen 0,1 µm und 8 µm angegeben, während z.B. eine Matrix, die auf einem Glasmonolith basiert, Poren mit einem Durchmesser zwischen 15 und 2000 Å aufweist. Für die Maschenweite des Netzwerks der PN-Systeme wird in EP 0,313,053 ein bevorzugter Bereich zwischen 0,5 und 2 µm angegeben.

Ein wesentlicher Unterschied der erfindungsgemäßen elektrooptischen Flüssigkristallsysteme zu den bisher üblichen besteht jedoch in der verwendeten Flüssigkristallmischung.

Es wurde gefunden, daß Flüssigkristallmischungen, die auf Flüssigkristallverbindungen basieren, welche eine mittlere Doppelbrechung

$$0{,}09 \leq \Delta n \leq 0{,}20 \ (20\ °C,\ 589\ nm)$$

aufweisen, durch eine verringerte Löslichkeit und/oder Temperaturabhängigkeit der Löslichkeit der Flüssigkristallmischung und/oder einer oder einiger Komponenten der Flüssigkristallmischung gekennzeichnet sind; der Begriff Komponente soll hier sowohl optisch anisotrope, flüssig kristalline oder auch nicht flüssigkristalline Einzelverbindungen als auch Gruppen homologer Einzelverbindungen umfassen.

Die gemäß der Erfindung verwendeten Flüssigkristallmischungen weisen wegen des weitgehenden Verzichts auf Verbindungen mit sehr niedriger oder sehr hoher Doppelbrechung eine optisch homogene Zusammensetzung auf und unterscheiden sich damit deutlich von bislang in den beschriebenen optischen Systemen verwendeten Flüssigkristallmischungen, welche insbesondere auf Alkyl- oder Alkoxy-cyanobiphenylen und/oder -terphenylen und/oder 2-(4-Cyanophenyl)-pyridinen basieren. Es ist zwar z. B. in DE 40 05 869 bereits erkannt worden, daß Mischungen mit einer mittleren Doppelbrechung zwar einerseits eine geringere Streuung, andererseits jedoch einen geringeren haze und insbesondere off-axis haze aufweisen, so daß insgesamt für solche Mischungen günstigere elektrooptische Eigenschaften resultieren. Die Einstellung einer mittleren Doppelbrechung der Mischung wurde jedoch häufig durch Verwendung von Komponenten mit extrem niedriger Doppelbrechung wie z. B. trans-4-(trans-4-alkyl- oder alkoxycyclohexyl)-cyclohexylcarbonitrilen oder auch extrem hoher Doppelbrechung wie z. B. 4-Alkyl- oder Alkoxy-4"-cyanoterphenyle erzielt.

Der Massenanteil der eine mittlere Doppelbrechung aufweisenden Flüssigkristallverbindungen beträgt mehr als 80 % und vorzugsweise mindestens 85 %. Besonders bevorzugt enthalten die gemäß der Erfindung verwendeten

Flüssigkristallmischungen mehr als 40 und insbesondere mindestens 50 Massenprozente an Verbindungen, welche eine Doppelbrechung im Intervall

$$0{,}11 \leq \Delta n \leq 0{,}17 \ (20\ °C,\ 589\ nm)$$

aufweisen.

Der Massenanteil von Flüssigkristallverbindungen, welche eines der folgenden Strukturelemente (1) - (9)

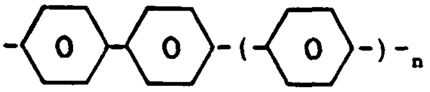

(1)

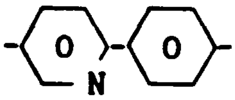

(2)

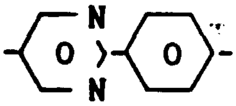

(3)

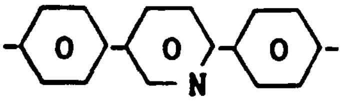

(4)

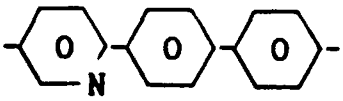

(5)

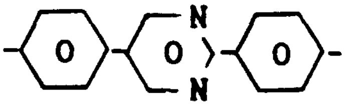

(6)

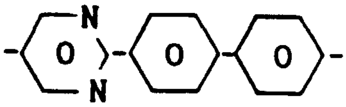

(7)

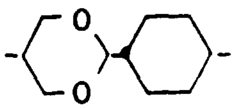

(8)

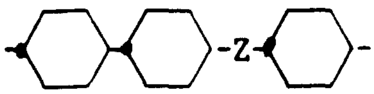

(9)

aufweist, worin n 0 oder 1 und Z -COO-, -OCO-, $-CH_2O-$ oder $-C_2H_4-$ bedeuten, an den Flüssigkristallmischungen ist kleiner als 10 % und vorzugsweise kleiner als 7,5 %.

Besonders bevorzugt sind gemäß der Erfindung verwendete Flüssigkristallmischungen, welche 30-45 Massenprozente an Verbindungen mit einer Doppelbrechung $0,10 \leq \Delta n \leq 0,12$ und 35-55 Massenprozente an Verbindungen mit einer Doppelbrechung $0,14 \leq \Delta n \leq 0,18$ enthalten.

Besonders bevorzugt sind weiter gemäß der Erfindung verwendete Flüssigkristallmischungen, welche mindestens eine Esterverbindung der Formel I enthalten

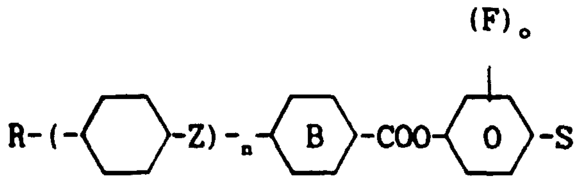

I

worin

R Alkyl mit bis zu 15 C-Atomen, worin auch eine oder 2 nicht benachbarte $CH_2$-Gruppen durch -O-oder -CH=CH- ersetzt sein können,

Z -COO-, -OCO-, $-CH_2CH_2-$ oder eine Einfachbindung,

S -CN, -F, -Cl, -NCS, $-CF_3$, $-OCHF_2$ oder $OCF_3$,

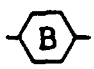

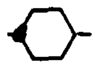 , 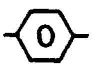 oder 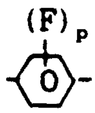 ,

p und o unabhängig voneinander 0, 1 oder 2,

n 0 oder 1,

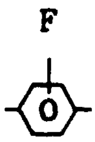

2-Fluor-1,4-phenylen oder 3-Fluor-1,4-phenylen,

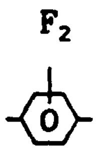

3,5-Difluoro-1,4-phenylen oder 2,3-Difluoro-1,4-phenylen bedeuten.

Die Verbindungen der Formel I umfassen 2- und 3-kernige Ester der Teilformeln I-1 - I-10:

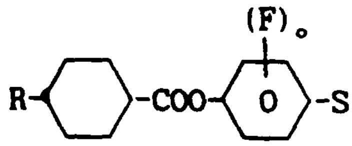

I-1

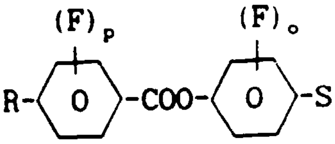

I-2

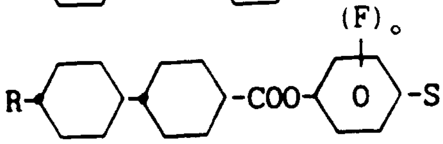

I-3

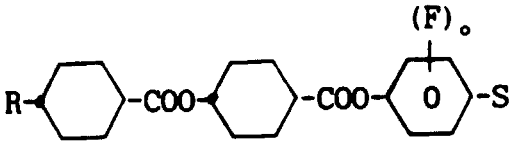

I-4

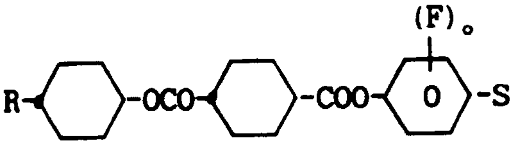

I-5

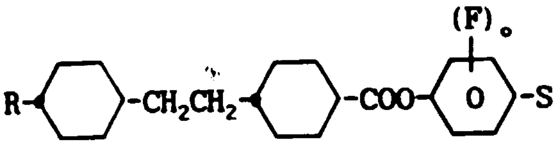

I-6

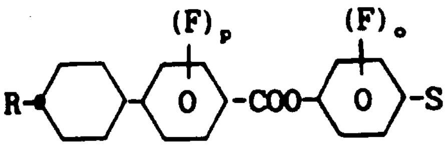

I-7

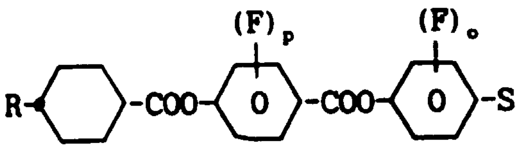

I-8

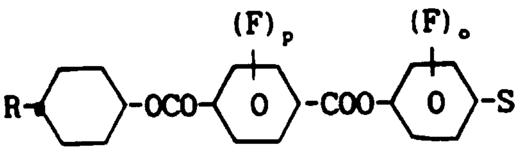

I-9

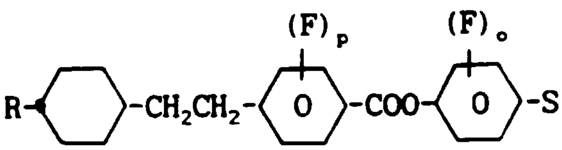

I-10

In den Verbindungen der Formeln I-1 - I-10 bedeutet R vorzugsweise Alkyl oder Alkoxy mit 1-10, insbesondere jedoch mit 1-8 C-Atomen, daneben auch n-Alkoxyalkyl und insbesondere n-Alkoxymethyl und n-Alkoxyethyl. Ganz besonders bevorzugt sind Verbindungen der Formeln I-1 - I-4, worin R Methyl, Ethyl, n-Propyl, n-Butyl, n-Pentyl, n-Hexyl, n-Heptyl, n-Octyl, n-Nonyl, n-Decyl, n-Methoxy, n-Ethoxy, n-Propoxy, n-Butoxy, n-Pentoxy, n-Hexoxy, n-Heptoxy, n-Octoxy, n-Nonoxy, n-Decoxy oder n-Undecoxy bedeutet.

In den Verbindungen der Formeln I-1 - I-10 kann der Rest R geradkettig oder verzweigt sein. R ist vorzugsweise geradkettig, jedoch können Verbindungen der Formeln I-1 - I-10 mit verzweigten Alkyl- oder Alkoxyresten gelegentlich wegen einer besseren Löslichkeit in den üblichen flüssigkristallinen Basismaterialien von Bedeutung sein, insbesondere aber als chirale Dotierstoffe, wenn sie optisch aktiv sind. Elektrooptische Systeme, deren Flüssigkristallmischung eine oder mehrere chirale Komponenten enthält, sind in DE 39 11 255.1 beschrieben.

Verzweigte Gruppen dieser Art enthalten in der Regel nicht mehr als eine Kettenverzweigung. Bevorzugte verzweigte Reste R sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, 2-Octyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 2-Octyloxy, 2-Oxa-3-methylbutyl, 3-Oxa-4-methylpentyl, 4-Methylhexyl, 2-Nonyl, 6-Methyloctoxy, 2-Methyl-3-oxapentyl, 2-Methyl-3-oxahexyl.

In den Verbindungen der Teilformeln I-1 - I-10 bedeutet S vorzugsweise -CN, -F, -Cl, $CF_3$, -$OCHF_2$ oder -$OCF_3$ und insbesondere -CN, -F, -Cl, -$CF_3$ oder -$OCF_3$. Verbindungen der Teilformeln I-1 - I-10, welche eine in 3- und/oder 5-Position durch F substituierte 1,4-Phenylengruppe als terminale Gruppe und/oder als mittlere Gruppe

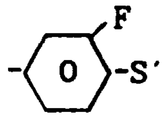

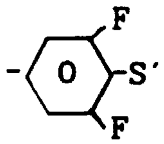

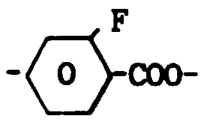

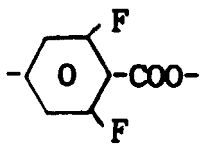

mit S' = -CN, -F, -Cl, $CF_3$ oder $OCF_3$ enthalten, weisen relativ hohe bis sehr hohe Werte für $\Delta\varepsilon$ auf und sind besonders bevorzugt. Flüssigkristallmischungen, weiche eine oder mehrere Verbindungen der Teilformeln I-1 - I-6 enthalten, sind besonders bevorzugt. Weiter bevorzugt sind Flüssigkristallmischungen, welche mindestens eine Verbindung der

Teilformeln I-7 - I-10 aufweist, worin die Gruppe

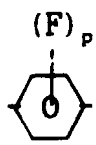

2- oder 3-Fluor-1,4-phenylen oder 3,5-Difluor-1,4-phenylen und/oder die terminale Gruppe

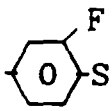 oder 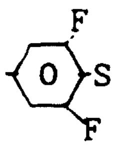

ist .

Der Einfachheit halber bedeuten im folgenden Phe 1,4-Phenylen, Phe.2F 2-Fluor-1,4-phenylen, Phe.3F 3-Fluor-1,4-phenylen, Cyc trans-1,4-Cyclohexylen, Pyr Pyrimidin-2,5-diyl und Pyd Pyridin-2,5-diyl, wobei durch die beiden Abkürzungen Pyr und Pyd jeweils die beiden möglichen Stellungsisomeren umfaßt sind. Weiter soll mit Phe. (F) eine 1,4-Phenylengruppe bezeichnet werden, die unsubstituiert oder in 2- oder 3-Stellung monofluoriert sein kann. Phe.3F ist eine in 3-Stellung durch F monofluorierte 1,4-Phenylengruppe und Phe.2F und Phe.5F haben eine entsprechende Bedeutung; Phe.3F5F bezeichnet eine in 3- und 5-Stellung disubstituierte 1,4-Phenylengruppe, während Phe.F2 eine in 2- und 3-Stellung durch Fluor disubstituierte 1,4-Phenylengruppe ist.

Flüssigkristallmischungen, welche eine oder mehrere Verbindungen aus der folgenden kleineren Gruppe von Verbindungen enthalten, weisen günstige Eigenschaft auf und sind besonders bevorzugt:

| | |
|---|---|
| R-Cyc-COO-Phe-CN | I-1-1 |
| R-Cyc-COO-Phe . 3F-CN | I-1-2 |
| R-Cyc-COO-Phe-F | I-1-3 |
| R-Cyc-COO-Phe . 3F-F | I-1-4 |
| R-Cyc-COO-Phe .3F5F-F | I-1-5 |
| R-Cyc-COO-Phe-Cl | I-1-6 |
| R-Cyc-COO-Phe. 3F-Cl | I-1-7 |
| R-Cyc-COO-Phe. 3F5F-Cl | I-1-8 |
| R-Cyc-COO-Phe-$CF_3$ | I-1-9 |
| R-Cyc-COO-Phe.3F-$CF_3$ | I-1-10 |
| R-Cyc-COO-Phe.3F5F-$CF_3$ | I-1-11 |
| R-Cyc-COO-Phe-$OCF_3$ | I-1-12 |
| R-Cyc-COO-Phe.3F-$OCF_3$ | I-1-13 |
| R-Cyc-COO-Phe.3F5F-$OCF_3$ | I-1-14 |
| R-Phe-COO-Phe-CN | I-2-1 |
| R-Phe. 3F-COO-Phe-CN | I-2-2 |
| R-Phe.3F-COO-Phe.3F-CN | I-2-3 |
| R-Phe.3F5F-COO-Phe-CN | I-2-4 |
| R-Phe-COO-Phe-F | I-2-5 |
| R-Phe.3F-COO-Phe-F | I-2-6 |

| | |
|---|---|
| R-Phe-COO-Phe.3F-F | I-2-7 |
| R-Phe-COO-Phe.3F5F-F | I-2-8 |
| R-Phe.3F5F-COO-Phe-F | I-2-9 |
| R-Phe.2F-COO-Phe.3F5F-F | I-2-10 |
| R-Phe-COO-Phe-Cl | I-2-11 |
| R-Phe.3F-COO-Phe-Cl | I-2-12 |
| R-Phe-COO-Phe.3F-Cl | I-2-13 |
| R-Phe-COO-Phe.3F5F-Cl | I-2-14 |
| R-Phe.3F5F-COO-Phe-Cl | I-2-15 |
| R-Phe-COO-Phe-$CF_3$ | I-2-16 |
| R-Phe.3F-COO-Phe-$CF_3$ | I-2-17 |
| R-Phe-COO-Phe.3F-$CF_3$ | I-2-18 |
| R-Phe-COO-Phe.3F5F-$CF_3$ | I-2-19 |
| R-Phe.3F5F-COO-Phe-$CF_3$ | I-2-20 |
| R-Phe-COO-Phe-$OCF_3$ | I-2-21 |
| R-Phe.3F-COO-Phe-$OCF_3$ | I-2-22 |
| R-Phe-COO-Phe.3F-$OCF_3$ | I-2-23 |
| R-Phe-COO-Phe.3F5F-$OCF_3$ | I-2-24 |
| R-Phe.3F5F-COO-Phe-$OCF_3$ | I-2-25 |
| R-Cyc-Cyc-COO-Phe-CN | I-3-1 |
| R-Cyc-Cyc-COO-Phe.3F-CN | I-3-2 |
| R-Cyc-Cyc-COO-Phe-F | I-3-3 |
| R-Cyc-Cyc-COO-Phe.3F-F | I-3-4 |
| R-Cyc-Cyc-COO-Phe.3F5F-F | I-3-5 |
| R-Cyc-Cyc-COO-Phe.F2-F | I-3-6 |
| R-Cyc-Cyc-COO-Phe-Cl | I-3-7 |
| R-Cyc-Cyc-COO-Phe.3F-Cl | I-3-8 |
| R-Cyc-Cyc-COO-Phe.3F5F-Cl | I-3-9 |
| R-Cyc-Cyc-COO-Phe-$CF_3$ | I-3-10 |

| | |
|---|---|
| R-Cyc-Cyc-COO-Phe.3F-$CF_3$ | I-3-11 |
| R-Cyc-Cyc-COO-Phe.3F5F-$CF_3$ | I-3-12 |
| R-Cyc-Cyc-COO-Phe-$OCF_3$ | I-3-13 |
| R-Cyc-Cyc-COO-Phe.3F-$OCF_3$ | I-3-14 |
| R-Cyc-Cyc-COO-Phe.3F5F-$OCF_3$ | I-3-15 |
| R-Cyc-Phe-COO-Phe-CN | I-7-1 |
| R-Cyc-Phe-COO-Phe.3F-CN | I-7-2 |
| R-Cyc-Phe.3F-COO-Phe-CN | I-7-3 |
| R-Cyc-Phe.3F5F-COO-Phe-CN | I-7-4 |
| R-Cyc-Phe-COO-Phe-NCS | I-7-5 |
| R-Cyc-Phe-COO-Phe.3F-NCS | I-7-6 |
| R-Cyc-Phe.3F-COO-Phe-NCS | I-7-7 |
| R-Cyc-Phe.3F5F-COO-Phe-NCS | I-7-8 |
| R-Cyc-Phe-COO-Phe-F | I-7-9 |
| R-Cyc-Phe.3F-COO-Phe-F | I-7-10 |
| R-Cyc-Phe.3F5F-COO-Phe-F | I-7-11 |
| R-Cyc-Phe-COO-Phe-Phe.3F-F | I-7-12 |
| R-Cyc-Phe-COO-Phe-Cl | I-7-13 |
| R-Cyc-Phe.3F-COO-Phe-Cl | I-7-14 |
| R-Cyc-Phe.3F5F-COO-Phe-Cl | I-7-15 |
| R-Cyc-Phe-COO-Phe-Phe.3F-Cl | I-7-16 |
| R-Cyc-Phe-COO-Phe-$CF_3$ | I-7-17 |
| R-Cyc-Phe. 3F-COO-Phe-$CF_3$ | I-7-18 |
| R-Cyc-Phe.3F5F-COO-Phe-$CF_3$ | I-7-19 |
| R-Cyc-Phe-COO-Phe-Phe.3F-$CF_3$ | I-7-20 |
| R-Cyc-Phe-COO-Phe-$OCF_3$ | I-7-21 |
| R-Cyc-Phe.3F-COO-Phe-$OCF_3$ | I-7-22 |
| R-Cyc-Phe.3F5F-COO-Phe-$OCF_3$ | I-7-23 |
| R-Cyc-Phe-COO-Phe-Phe.3F-$OCF_3$ | I-7-24 |

R-Cyc-Phe-COO-Phe-$OCHF_2$ I-7-25

R-Cyc-Phe.3F-COO-Phe-$OCHF_2$ I-7-26

R-Cyc-Phe.3F5F-COO-Phe-$OCHF_2$ I-7-27

R-Cyc-Phe-COO-Phe-Phe.3F-OCHF I-7-28

Die Verbindungen der Formel I werden nach an sich bekannten Methoden dargestellt, wie sie in der Literatur (z.B. in den Standardwerken wie Houben-Weyl, Methoden der Organischen Chemie, Georg-Thieme-Verlag, Stuttgart Bd IX, S. 867 ff.) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Die Verbindungen der Formel I werden vorzugsweise nach den in DE 33 17 921, EP 0,019,665, DE 38 21 340, JE 58-126839, DE 33 39 216, EP 0,034,350 und EP 0,126,601 beschriebenen Methoden dargestellt.

Die gemäß der Erfindung verwendeten Flüssigkristallmischungen enthalten neben Verbindungen der Formeln I-1 - I-10 vorzugsweise auch Verbindungen der Formel II

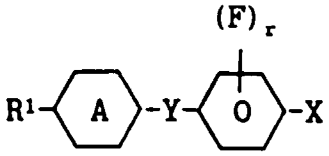

II

worin

$R^1$ $R^2$ oder

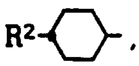

$R^2$ eine Alkylgruppe mit 1-15 C-Atomen, worin auch eine oder zwei nicht benachbarte $CH_2$-Gruppen durch -O-, -CO- und/oder -CH=CH- ersetzt sein können,

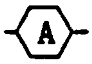

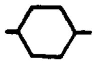 oder 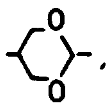

r 0, 1 oder 2

Y eine Einfachbindung. $-CH_2CH_2-$ oder -OCO- und

X -CN, -NCS, -F, -Cl, $-CF_3$, $-OCF_3$ oder $-OCHF_2$

Die wichtigsten als weitere Bestandteile der in den erfindungsgemäßen elektrooptischen Systemen verwendeten Flüssigkristallmischungen in Frage kommenden Verbindungen lassen sich durch die Formeln 1, 2, 3 und 4 charakterisieren:

R' -L-E-R'' 1
R' -L-COO-E-R'' 2

R'-L-OOC-E-R''   3

R'-L-CH2CH2-E-R''   4

In den Formeln 1, 2, 3 und 4 bedeuten L und E, die gleich oder verschieden sein können, jeweils unabhängig voneinander einen bivalenten Rest aus der aus -Phe-, -Cyc-, -Phe-Phe-, -Phe-Cyc-, -Cyc-Cyc-, -Pyr-, -Dio-, -G-Phe- und -G-Cyc-sowie deren Spiegelbilder gebildeten Gruppe, wobei jedoch mindestens einer der in den Verbindungen der Formeln 1-4 enthalten Menge Cyc ist und Verbindungen, enthaltend ein Strukturmerkmal der Formeln (1) - (9), nur einen sehr geringen Massenanteil von weniger als 10 % an der Mischung aufweisen.

In diesen Verbindungen der Formeln 1-4 bedeutet Phe unsubstituiertes oder durch Fluor substituiertes 1,4-Phenylen, Cyc trans-1,4-Cyclohexylen oder 1,4-Cyclohexenylen, Pyr Pyrimidin-2,5-diyl oder Pyridin-2,5-diyl, Dio 1,3-Dioxan-2,5-diyl und G 2-(trans-1,4-Cyclohexyl)-ethyl, Pyrimidin-2,5-diyl, Pyridin-2,5-diyl oder 1,3-Dioxan-2,5-diyl.

R' und R'' bedeuten in den Verbindungen der Teilformeln 1a, 2a, 3a und 4a jeweils unabhängig voneinander Alkyl, Alkenyl, Alkoxy, Alkenyloxy oder Alkanoyloxy mit bis zu 8 Kohlenstoffatomen. Bei den meisten dieser Verbindungen sind R' und R'' voneinander verschieden, wobei einer dieser Reste meist Alkyl oder Alkenyl ist. In den Verbindungen der Teilformeln 1b, 2b, 3b und 4b bedeutet R'' -CN, $-(C)_kCV_lH_{3-1}$, F, Cl oder -NCS, wobei k 0 oder 1, l 1, 2 oder 3 und V F oder Cl bedeutet; R hat dabei die bei den Verbindungen der Teilformeln 1a bis 4a angegebene Bedeutung und ist vorzugsweise Alkyl oder Alkenyl. Aber auch andere Varianten der vorgesehenen Substituenten in den Verbindungen der Formeln 1, 2, 3 und 4 sind gebräuchlich. Viele solcher Substanzen oder auch Gemische davon sind im Handel erhältlich. Alle diese Substanzen sind nach literaturbekannten Methoden oder in Analogie dazu erhältlich.

Die in den erfindungsgemäßen elektrooptischen Flüssigkristall-Systemen verwendeten Flüssigkristallmischungen enthalten vorzugsweise neben Komponenten aus der Gruppe der Verbindungen 1a, 2a, 3a und 4a (Gruppe 1) auch Komponenten aus der Gruppe der Verbindungen 1b, 2b, 3b und 4b (Gruppe 2), deren Anteile vorzugsweise wie folgt sind:

Gruppe 1: 0 bis 60 %, insbesondere 5 bis 50 %,
Gruppe 2: 0 bis 60 %, insbesondere 5 bis 40 %.

Die dielektrische Anisotropie der verwendeten Flüssigkristallmischung ist positiv > 0 und vorzugsweise > 3. Für kleinere Werte der dielektrischen Anisotropie werden sehr hohe Schwellenspannungen beobachtet. Besonders bevorzugt sind Werte $\Delta\varepsilon > 5$.

Ganz besonders bevorzugt sind Flüssigkristallmischungen, welche eine sowohl optisch als auch dielektrisch weitgehend homogene Zusammensetzung aufweisen, d.h. die Flüssigkristallmischung basiert auf Flüssigkristallverbindungen, welche

(i) eine optische Anisotropie $0{,}09 \leq \Delta n \leq 0{,}20$ und gleichzeitig
(ii) eine dielektrische Anisotropie $\Delta\varepsilon \leq 20$ und insbesondere $\Delta\varepsilon \leq 15$

aufweisen.

Dabei ist der Massenanteil an Verbindungen, welche gleichzeitig die Bedingungen (i) und (ii) erfüllen, vorzugsweise nicht kleiner als 60 % insbesondere mindestens 75 %, und ganz besonders mindestens 85 %.

Es hat sich gezeigt, daß diese Mischungen neben einer verringerten Löslichkeit und/oder Temperaturabhängigkeit der Löslichkeit in der Matrix eine sehr hohe Temperatur- und UV-Stabilität aufweisen; daher können diese Mischungen insbesondere für Anwendungen mit sehr hohen Anforderungen wie z. B. für out-door-Anwendungen oder für mit einer aktiven Matrix angesteuerte Displays herangezogen werden. Diese Mischungen enthalten insbesondere Flüssigkristallmischungen, die neben den bisher angeführten Merkmalen durch eine polare Endgruppe, sofern vorhanden, charakterisiert sind, welche aus der -F, -Cl, $-CF_3$, $-OCF_3$ oder $-OCHF_2$ umfassenden Gruppen ausgewählt ist. Ganz bevorzugt sind solche Flüssigkristallmischungen, in welchen der Massenanteil an Verbindungen, welche eine terminale Carbonitril- oder Isothiocyanotogruppe aufweisen, kleiner als 15 % und insbesondere nicht mehr als 10 % ist.

Die Herstellung der verwendbaren Flüssigkristallmischungen erfolgt in an sich üblicher Weise. In der Regel wird die gewünschte Menge der in geringerer Menge verwendeten Komponenten in den den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die gemäß der Erfindung verwendeten Flüssigkristallmedien können durch geeignete Zusätze modifiziert und im Hinblick auf die jeweilige Anwendung optimiert werden.

Derartige Zusätze sind dem Fachmann bekannt und in der Literatur ausführlich beschrieben. So können z.B. pleochroitische Farbstoffe zur Herstellung farbiger elektrooptischer Systeme oder Substanzen zur Veränderung der Viskosität und/oder der Temperaturabhängigkeit elektroopischer Parameter der Medien zugesetzt werden. Derartige Substanzen sind z.B. in H. Kelker, R. Hatz, Handbook of Liquid Crystals, Verlag Chemie, Weinheim, 1980 und in den DE-OS 22 09 127, 22 40 864, 23 21 632, 23 38 281, 24 50 088, 26 37 430, 28 53 728 und 29 02 177 beschrieben.

Elektrooptische Flüssigkristallsysteme, bei denen der Flüssigkristallmischung pleochroitische Farbstoffe in einem Gewichtsprozentbereich von 0-15 %, insbesondere 0-10 % und ganz besonders 0-7,5 % zugesetzt sind, sind bevorzugt.

Der Fachmann kann weiter aus dem großen Pool nematischer oder nematogener Substanzen Zusätze zu den beschriebenen Flüssigkristallmischungen unter Berücksichtigung der Bedingung (i) und insbesondere der Bedingungen (i) und (ii) so auswählen, daß die Doppelbrechung $\Delta n$ und/oder der ordentliche Brechungsindex no und/oder andere Brechungsindizes und/oder die Viskosität und/oder die dielektrische Anisotropie und/oder weitere Parameter der Flüssigkristallmischung im Hinblick auf die jeweilige Anwendung optimiert werden.

Zur Erhöhung des Klärpunkts kann der Fachmann den in den erfindungsgemäßen Systemen verwendeten Flüssigkristallmischungen z.B. hochklärende Substanzen zusetzen wie z.B.

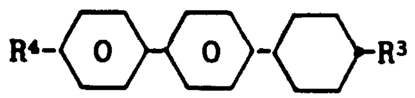

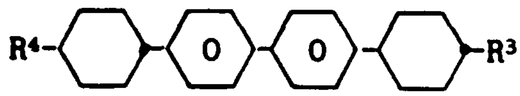

wobei $R^4$ und $R^3$ jeweils unabhängig voneinander Alkyl, Methoxy, Alkoxycarbonyl oder Alkanoyloxy mit 1-15 C-Atomen bedeuten.

Wird das erfindungsgemäße System mit einer Wechselspannung angesteuert, ist die Verwendung einer hochviskosen Flüssigkristallmischung erforderlich, da sonst insbesondere bei niederen bis mittleren Frequenzen eine flimmernde Anzeige resultiert. Zur Erhöhung der Viskosität kann der Fachmann der Flüssigkristallmischung hochviskose Flüssigkristallverbindungen oder aber insbesondere ein oder mehrere Seitenkettenpolymere, wie dies in DE 39 19 942 beschrieben ist, zusetzen. Wird das elektrooptische System dagegen z.B. als Matrixdisplay mit hohen Informationsgehalt verwendet, sind insbesondere niedrigviskose Flüssigkristallmischungen zur Erzielung kleiner Schaltzeiten bevorzugt. Der Fachmann kann aus dem großen Pool nematischer oder nematogener Verbindungen solche mit niedriger Viskosität auswählen, wie z.B.

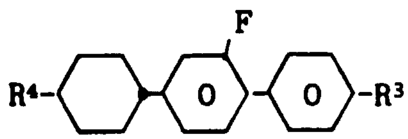

wobei R4 und R3 die oben angegebene Bedeutung haben. Gegebenenfalls können hochnematogene Substanzen wie z.B.

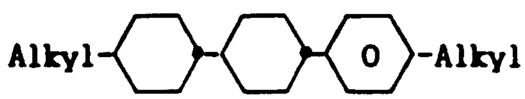

zugesetzt werden.

Durch die beschriebenen Zusätze kann die Flüssigkristallmischung im Hinblick auf die jeweilige Anwendung modifiziert und optimiert werden. Entscheidend aber ist, daß optisch homogene Flüssigkristalle, welche auf Flüssigkristallmischungen mit $0{,}09 \leq \Delta n \leq 0{,}20$ basieren, zur Verwendung in den beschriebenen Flüssigkristallsystemen besonders geeignet sind und insbesondere eine verringerte Löslichkeit und/oder Temperaturabhängigkeit der Löslichkeit des Flüssigkristalls in dem Matrixmaterial aufweisen. Besonders geeignet sind Flüssigkristalle, die eine oder mehrere Verbindungen der Formel I enthalten. Ganz besonders günstige Eigenschaften weisen Flüssigkristallmischungen auf, die eine weitgehend homogene optische und dielektrische Zusammensetzung aufweisen.

Die folgenden Beispiele sollen die Erfindung erläutern, ohne sie zu begrenzen.

Es bedeuten:

K: Kristallin-fester Zustand,
S: smektische Phase (der Index kennzeichnet der Phasentyp),
N: nematische Phase,
Ch: cholesterische Phase,
I: Isotrope Phase.

Die zwischen 2 Symbolen stehende Zahl gibt die Umwandlungstemperatur in Grad Celsius an.
Die angegebenen Prozentzahlen sind Massenprozente.

Beispiel 1

a) Ein elektrooptisches Flüssigkristallsystem, enthaltend eine Flüssigkristallmischung, die aus folgenden Verbindungen besteht

| | |
|---|---|
| 15,0 % | p-(trans-4-Propylcyclohexyl)-benzonitril |
| 10,0 % | p-(trans-4-Pentylcyclohexyl)-benzonitril |
| 9, 0 % | trans-4-Propylcyclohexancarbonsäure-(p-cyanphenylester) |
| 9,0 % | trans-4-Pentylcyclohexancarbonsäure-(p-cyanphenylester) |
| 12,0 % | trans,trans-4'-Propylbicyclohexan-4-ylcarbonsäure-(4-cyanphenylester) |
| 10,0 % | trans,trans-4'-Pentylbicyclohexan-4-ylcarbonsäure-(4-cyanphenylester) |
| 10,0 % | trans,trans-4'-Propylbicyclohexan-4-ylcarbonsäure-(4-propyl-2-fluorphenylester) |
| 10,0 % | trans,trans-4'-Propylbicyclohexan-4-ylcarbonsäure-(4-pentyl-2-fluorphenylester) |
| 10,0 % | trans,trans-4'-Pentylbicyclohexan-4-ylcarbonsäure-(4-pentyl-2-fluorphenylester) |
| 5,0 % | 4- (trans-Pentylcyclohexyl)-4'-(trans-Propylcyclohexyl)-biphenyl, |

und folgende physikalischen Parameter aufweist:

| | |
|---|---|
| Klärpunkt: | 142 °C |
| Viskosität (20 °C): | 46 $mm^2$ $s^{-1}$ |
| Dielektrische Anisotropie: | + 7,9 |
| Optische Anisotropie: | 0,1207. |

b) Das elektrooptische Flüssigkristallsystem wird nach verschiedenen Verfahren 1.1-1.3 und 2 hergestellt

1. Mikrotröpfchen-Matrix-Systeme

1.1 Die Flüssigkristallmischung aus a) wird mit dem durch UV-Bestrahlung härtbaren Klebstoff NOA 65 (Norland Products) im Verhältnis 1,6:1 bei Raumtemperatur gerührt, bis eine klare Lösung erhalten wird, die zusammen mit Abstandshaltern (20 µm) zwischen 2 durchsichtige, mit Elektrodenschichten versehene Glassubstrate gebracht wird. Die Glassubstrate werden zusammengedrückt, wodurch ein gleichmäßiger Film mit einer Dicke von 20 µm erhalten wird, der durch eine 1-minütige UV-Bestrahlung ausgehärtet wird.

1.2 Die Flüssigkristallmischung aus a) wird mit Epikote 828 und Capcure 3-800 (Miller Stephenson Company) im Verhältnis 1:1:1 bei Raumtemperatur gerührt, bis eine klare Lösung erhalten wird; die Rührzeit wird so kurz wie möglich gehalten, da die Lösung bei Raumtemperatur bereits nach etwa 1/2 h ausgehärtet ist. Die Lösung wird zusammen mit Abstandshaltern (20 µm) zwischen 2 durchsichtige, mit Elektrodenschichten versehene Glassubstrate gebracht, die zusammengedrückt werden, wodurch ein gleichmäßiger Film mit einer Dicke von 20 µm erhalten wird. Zur Beschleunigung des Aushärtprozesses können die Filme auf Temperatur bis 100 °C erwärmt werden.

1.3 5 g der Flüssigkristallmischung aus a) werden mit 15 g 20 % wäßriger PVA-Losung bei Raumtemperatur 2 Minuten lang mit 2.000 rpm gerührt. Die erhaltene Lösung wird 24 h lang entgast und zusammen mit Abstandshaltern (20 µm) in dünner Schicht auf ein mit einer Elektrodenschicht versehenes Glassubstrat aufgebracht. Die Anordnung wird 1 h bei 85 °C getrocknet, bevor ein zweites mit einer Elektrodenschicht versehenes Glassubstrat aufgedrückt wird, wodurch ein gleichmäßiger Film mit einer Dicke von 20 µm erhalten wird. Das so erhaltene System wird weitere 24 h bei 85 °C getrocknet.

2. Netzwerksystem
Die Flüssigkristallmischung aus a) wird mit Tri- methylolpropan-triacrylat als polymerisierbarer Verbindung und 2-Hydroxy-2-methyl-1-phenylpropan-1-on (Darocure 1173, Handelsprodukt von E. Merck, Darmstadt) als Photoinitiator im Verhältnis 80 : 19,8 : 0,2 gerührt und unter Hinzufügung von Abstandhaltern mit einer Dicke von 20 µm zwischen 2 mit Elektrodenschichten versehene Glasplatten gebracht. Zur Härtung des Polymers wurde das erhaltene System mit einer definierten Geschwindigkeit (3 m/min) durch das Strahlungsfeld einer Halogenlampe (70 W/cm) gefahren.

Die nach den Verfahren b) 1.1-1.3 und 2 hergestellten elektrooptischen Systeme zeichnen sich durch einen breiten Arbeitstemperaturbereich, günstige Werte für die elektrooptischen Parameter und deren Temperaturabhängigkeit, durch eine niedrige Schwellenspannung und insbesondere durch eine hohe Stabilität und eine geringe Löslichkeit der Flüssigkristallmischung in der Matrix bzw. in dem Netzwerk aus.

Beispiel 2

a) Ein elektrooptisches Flüssigkristallsystem, enthaltend eine Flüssigkristallmischung, die aus folgenden Verbindungen besteht

| | |
|---|---|
| 15,0 % | 4-(trans-4-Propylcyclohexyl)-benzonitril |
| 10,0 % | 4-(trans-4-Pentylcyclohexyl)-benzonitril |
| 9,0 % | 4-Cyanophenyl trans-4-propylcyclohexyl-carboxylat |
| 9,0 % | 4-Cyanophenyl trans-4-pentylcyclohexyl-carboxylat |
| 12,0 % | 3-Fluoro-4-cyanophenyl trans-4-(trans-4-propylcyclohexyl)-cyclohexyl-carboxylat |
| 10,0 % | 3-Fluoro-4-cyanophenyl trans-4-(trans-4-pentylcyclohexyl)-cyclohexyl-carboxylat |
| 10,0 % | 2-Fluoro-4-propylphenyl trans-4-(trans-4-propylcyclohexyl)-cyclohexyl-carboxylat |
| 10,0 % | 2-Fluoro-4-pentylphenyl trans-4-(trans-4-propylcyclohexyl)-cyclohexyl-carboxylat |
| 10,0 % | 2-Fluoro-4-pentylphenyl trans-4-(trans-4-pentylcyclohexyl)-cyclohexyl-carboxylat |
| 5,0 % | 4-(trans-4-pentylcyclohexyl)-4'-(trans-4-propylcyclohexyl)-biphenyl |

und folgende physikalische Parameter aufweist:

| | |
|---|---|
| Klärpunkt: | $T_c$ = 143 °C |
| Viskosität: | $\eta$ = 51 $mm^2$ $s^{-1}$ (20 °C) |
| Dielektrische Anisotropie: | $\Delta\varepsilon$ = 9,1 (20 °C, 1 kHz) |
| Optische Anisotropie: | $\Delta n$ = 0,120 (20 °C, 589 nm) |

b) Das elektrooptische Flüssigkristallsystem wird nach den in Beispiel 1b) beschriebenen Verfahren 1.1-1.3 und 2 hergestellt.
Diese Systeme zeichnen sich durch einen breiten Arbeitstemperaturbereich, günstige Werte für die elektrooptischen Parameter und deren Temperaturabhängigkeit, durch eine niedrige Schwellenspannung und insbesondere durch eine hohe Stabilität und eine geringe Löslichkeit der Flüssigkristallmischung in der Matrix bzw. in dem Netzwerk aus.

Beispiel 3

a) Ein elektrooptisches Flüssigkristallsystem, enthaltend eine Flüssigkristallmischung, die aus folgenden Verbindungen besteht

| | |
|---|---|
| 15,0 % | 4- (trans-4-Propylcyclohexyl)-benzonitril |
| 10,0 % | 4-(trans-4-Pentylcyclohexyl)-benzonitril |
| 9,0 % | 4-(trans-4-Heptylcyclohexyl)-benzonitril |
| 9,0 % | 4-Fluorphenyl 4-(trans-4-pentylcyclohexyl)-2,6-difluorbenzoat |
| 12,0 % | 4-Cyanophenyl trans-4-(trans-4-propylcyclohexyl)-cyclohexylcarboxylat |
| 10,0 % | 4-Cyanophenyl trans-4-(trans-4-pentylcyclohexyl)-cyclohexylcarboxylat |
| 10,0 % | 2-Fluor-4-propylphenyl trans-4-(trans-4-propylcyclohexyl)-cyclohexylcarboxylat |
| 10,0 % | 2-Fluor-4-pentylphenyl trans-4-(trans-4-propylcyclohexyl)-cyclohexylcarboxylat |
| 10,0 % | 2-Fluor-4-pentylphenyl trans-4-(trans-4-pentylcyclohexyl)-cyclohexylcarboxylat |
| 5,0 % | 4-(trans-4-Pentylcyclohexyl)-4'-(trans-4-propylcyclohexyl)-biphenyl |

und folgende physikalische Parameter aufweist:

| | |
|---|---|
| Klärpunkt: | $T_c$ = 139 °C |
| Viskosität: | $\eta$ = 44 $mm^2\ s^{-1}$ (20 °C) |
| Dielektrische Anisotropie: | $\Delta\varepsilon$ = 8,2 (20 °C, 1 kHz) |
| Optische Anisotropie: | $\Delta n$ = 0,115 (20 °C, 589 nm) |

b) Das elektrooptische Flüssigkristallsystem wird nach den in Beispiel 1b) beschriebenen Verfahren 1.1-1.3 und 2 hergestellt.

Diese Systeme zeichnen sich durch einen breiten Arbeitstemperaturbereich, günstige Werte für die elektrooptischen Parameter und deren Temperaturabhängigkeit, durch eine niedrige Schwellenspannung und insbesondere durch eine hohe Stabilität und eine geringe Löslichkeit der Flüssigkristallmischung in der Matrix bzw. in dem Netzwerk aus.

Beispiel 4

a) Ein elektrooptisches Flüssigkristallsystem, enthaltend eine Flüssigkristallmischung, die aus folgenden Verbindungen besteht.

| | |
|---|---|
| 15,0 % | 4-(trans-4-Propylcyclohexyl)-benzonitril |
| 10,0 % | 4-(trans-4-Pentylcyclohexyl)-benzonitril |
| 9,0 % | 4-(trans-4-Heptylcyclohexyl)-benzonitril |
| 9,0 % | 3-Fluor-4-cyanophenyl-trans-4-pentyl-cyclohexylcarboxylat |
| 12,0 % | 4-Cyanophenyl-trans-4-(trans-4-propylcyclohexyl)-cyclohexyl-carboxylat |
| 10,0 % | 4-Cyanophenyl-trans-4-(trans-4-pentylcyclohexyl)-cyclohexyl-carboxylat |
| 10,0 % | 2-Fluor-4-propylphenyl-trans-4-(trans-4-propylcyclohexyl)-cyclohexyl-carboxylat |
| 10,0 % | 2-Fluor-4-pentylphenyl-trans-4-(trans-4-propylcyclohexyl)-cyclohexyl-carboxylat |
| 10,0 % | 2-Fluor-4-pentylphenyl-trans-4-(trans-4-pentylcyclohexyl)-cyclohexyl-carboxylat |
| 5,0 % | 4-(trans-4-Pentylcyclohexyl)-4'-(trans-4-propylcyclohexyl)-biphenyl |

und folgende physikalische Parameter aufweist:

Klärpunkt: $T_c$ = 122 °C

Viskosität: $\eta$ = 42 $mm^2$ $s^{-1}$ (20 °C)

Dielektrische Anisotropie: $\Delta\varepsilon$ = 8,5 (20 °C, 1 kHz)

Optische Anisotropie: $\Delta n$ = 0,115 (20 °C, 589 nm)

**Patentansprüche**

**1.** Elektrooptisches Flüssigkristallsystem

- welches zwischen 2 Elektroden, die gegebenenfalls auf Substratplatten aufgebracht sind, eine dielektrisch positive Flüssigkristallmischung und ein weiteres optisch transparentes Medium enthält,

- dessen Flüssigkristallmoleküle im ausgeschalteten Zustand eine unregelmäßige Orientierung aufweisen,

- bei dem einer der Brechungsindizes der Flüssigkristallmischung im wesentlichen mit dem Brechungsindex der Matrix $n_M$ übereinstimmt und/oder bei dem der Quotient aus der Masse der Flüssigkristallmischung und der Masse des optisch transparenten Mediums 1,5 oder mehr beträgt,

- welches in einem der beiden Schaltzustände unabhängig von der Polarisation des einfallenden Lichtes eine gegenüber dem anderen Zustand verminderte Transmission aufweist,
dadurch gekennzeichnet, daß die Flüssigkristallmischung auf einzelnen Flüssigkristallverbindungen basiert, die eine mittlere Doppelbrechung

$$0.09 \leq \Delta n \leq 0.20 \ (20\ °C,\ 589\ nm)$$

aufweisen, daß der Massenanteil dieser Flüssigkristallverbindungen an der Flüssigkristallmischung mehr als 80 % beträgt und der Massenanteil an Flüssigkristallverbindungen welche eines der folgenden Strukturelemente (1) - (9)

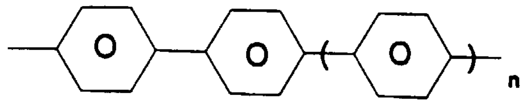

(1)

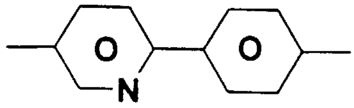

(2)

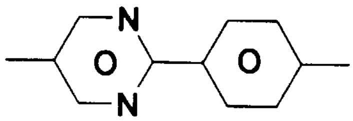

(3)

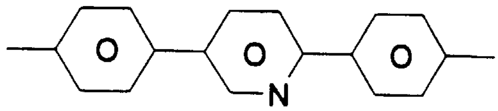

(4)

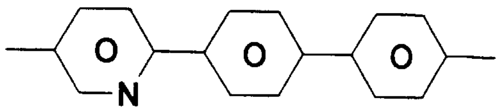

(5)

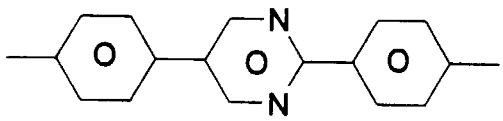

(6)

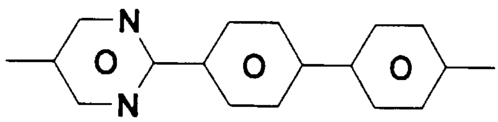

(7)

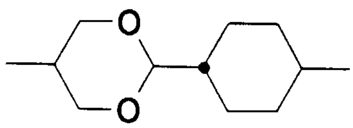

(8)

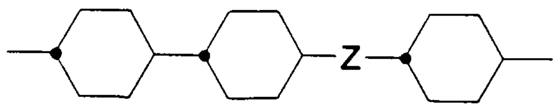

(9)

aufweisen, worin n 0 oder 1 und Z -COO-, -OCO-, $-CH_2O-$ oder $-C_2H_4$ bedeuten, an den Flüssigkristallmischungen kleiner als 10% ist.

**2.** Elektrooptisches Flüssigkristallsystem nach Anspruch 1, dadurch gekennzeichnet, daß der Massenanteil der eine mittlere Doppelbrechung aufweisenden Flüssigkristallverbindungen an der Flüssigkristallmischung mindestens 85 % beträgt.

**3.** Elektrooptisches Flüssigkristallsystem nach mindestens einem der Ansprüche 1 und 2, dadurch gekennzeichnet, daß die Flüssigkristallmischung mehr als 40 Massenprozent an Verbindungen, welche eine Doppelbrechung im Intervall $0{,}11 \leq \Delta n \leq 0{,}17$ bei 20 °C und 589 nm aufweisen, enthält.

**4.** Elektrooptisches Flüssigkristallsystem nach mindestens einem der Ansprüche 1 bis 3, dadurch gekennzeichnet,

daß die Flüssigkristallmischung mindestens eine Esterverbindung der Formel I enthält

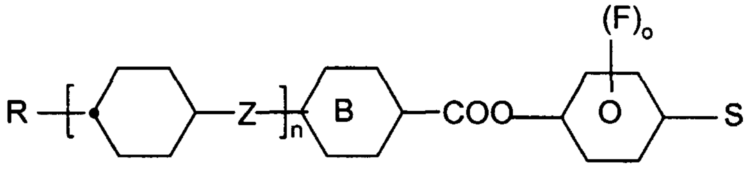

I

worin

R Alkyl mit bis zu 15 C-Atomen, worin auch eine oder 2 nicht benachbarte $CH_2$-Gruppen durch -O- oder -CH=CH- ersetzt sein können,

Z -COO-, -OCO-, $-CH_2CH_2-$ oder eine Einfachbindung,

S -CN, -NCS, -F, -Cl, $CF_3$, $-OCHF_2$ oder $OCF_3$

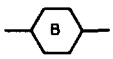 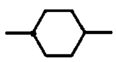, 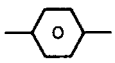 oder 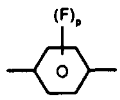

p und o unabhängig voneinander 0, 1 oder 2,

n 0 oder 1,

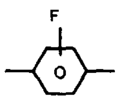

2-Fluor-1,4-phenylen oder 3-Fluor-1,4-phenylen, und

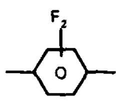

3,5-Difluor-1,4-phenylen oder 2,3-Difluor1,4-phenylen bedeuten.

**5.** Elektrooptisches Flüssigkristallsystem nach einem der Ansprüche 1-4, dadurch gekennzeichnet, daß die Flüssigkristallmischung eine oder mehrere Verbindungen der Formel II enthält,

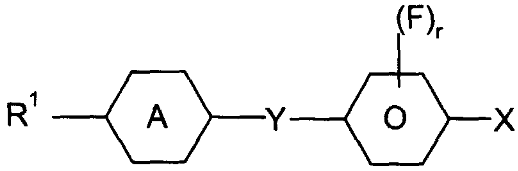

II

worin

$R^1$ $R^2$ oder

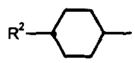
,

$R^2$ eine Alkylgruppe mit 1-15 C-Atomen, worin auch eine oder zwei nicht benachbarte $CH_2$-Gruppen durch -O-, -CO- und/oder -CH=CH- ersetzt sein können.

r 0, 1 oder 2,

Y eine Einfachbindung $-CH_2CH_2-$ oder -OOC-,

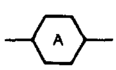 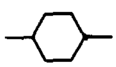 oder 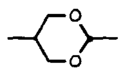

und

X -CN, -NCS, -F, -Cl, $CF_3$, $-OCHF_2$ oder $-OCF_3$ bedeuten, und die Bedeutung von

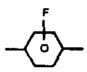 und 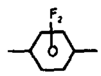

in Anspruch 4 gegeben ist.

**6.** Etektrooptisches Flüssigkristallsystem nach einem der Ansprüche 1-5, dadurch gekennzeichnet, daß die Mischung eine dielektrische Anisotropie $\Delta\varepsilon > 3$ aufweist.

**7.** Eletrooptisches Flüssigkristallsystem nach einem der Ansprüche 1-6, dadurch gekennzeichnet, daß die Mischung auf Verbindungen basiert, die eine dielektrische Anisotropie $\Delta\varepsilon \leq 20$ aufweisen.

**8.** Elektrooptisches Flüssigkristallsystem nach einem der Ansprüche 1-7, dadurch gekennzeichnet, daß die Flüssigkristallmischung mindestens einen pleochroitischen Farbstoff und/oder einen chiralen Dotierstoff enthält.

**9.** Elektrooptisches Flüssigkristallsystem nach mindestens einem der Ansprüche 1-8, dadurch gekennzeichnet, daß der Massenanteil an Verbindungen, welche gleichzeitig die Bedingungen (i) und (ii) erfüllen, also die

(i) eine optische Anisotropie $0{,}09 \leq \Delta n \leq 0{,}20$ und

(ii) eine dielektrische Anisotropie $\Delta\varepsilon \leq 20$
aufweisen, nicht kleiner als 60 % ist.

**10.** Verwendung einer Flüssigkristallmischung nach einem der Ansprüche 1-9 in einem NCAP-, PDLC- oder PN-System.

**11.** Verwendung eines elektrooptischen System nach mindestens einem der Ansprüche 1-9 für großflächige Anzeigesysteme, architektonische Anwendungen oder für Kraftfahrzeuge.

**12.** Verwendung eines elektrooptischen System nach mindestens einem der Ansprüche 1-9 für GH-Anzeigensysteme, Matrixdisplays mit hohem Informationsgehalt, Projektionssysteme oder Schalter.

## Claims

**1.** Electrooptical liquid-crystal system

- which contains a dielectrically positive liquid-crystal mixture and a further optically transparent medium between 2 electrodes, optionally applied to substrate plates,
- whose liquid-crystal molecules have an irregular alignment in the switched-off state,
- in which one of the refractive indices of the liquid-crystal mixture essentially corresponds to the refractive index of the matrix $n_m$ and/or in which the quotient of the mass of the liquid-crystal mixture and the mass of the optically transparent medium is 1.5 or more, and
- which has reduced transmission in one of the two switching states compared with the other state, irrespective of the polarisation of the incident light,

characterised in that the liquid-crystal mixture is based on individual liquid-crystal compounds which have a moderate birefringence of

$$0.09 \leq \Delta n \leq 0.20 \ (20°C, 589\ nm),$$

in that the proportion by weight of these liquid-crystal compounds in the liquid-crystal mixture is greater than 80 % and the proportion by weight of liquid-crystal compounds which have one of the following structural elements (1) - (9)

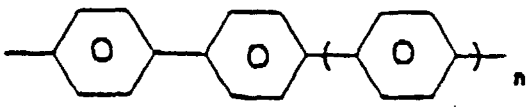

(1)

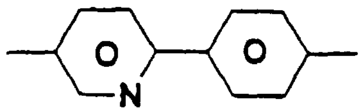

(2)

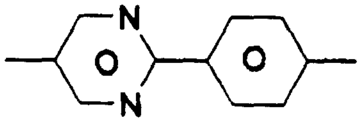

(3)

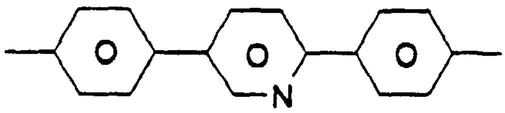

(4)

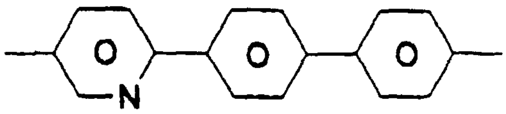

(5)

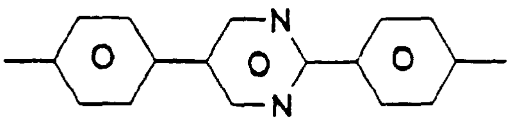

(6)

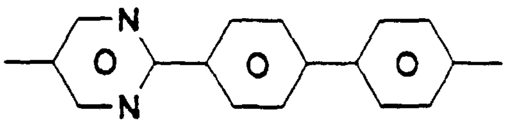

(7)

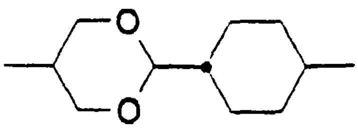

(8)

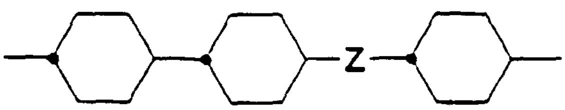

(9)

in which n is 0 or 1 and Z is -COO-, -OCO-, $-CH_2O-$ or $-C_2H_4$, in the liquid-crystal mixtures is less than 10 %.

**2.** Electrooptical liquid-crystal system according to Claim 1, characterised in that the proportion by weight of the liquid-crystal compounds having moderate birefringence in the liquid-crystal mixture is at least 85 %.

**3.** Electrooptical liquid-crystal system according to at least one of Claims 1 and 2, characterised in that the liquid-crystal mixture contains more than 40 per cent by weight of compounds which have a birefringence in the range $0.11 \leq \Delta n \leq 0.17$ at 20°C and 589 nm.

**4.** Electrooptical liquid-crystal system according to at least one of Claims 1 to 3, characterised in that the liquid-crystal mixture contains at least one ester compound of the formula I

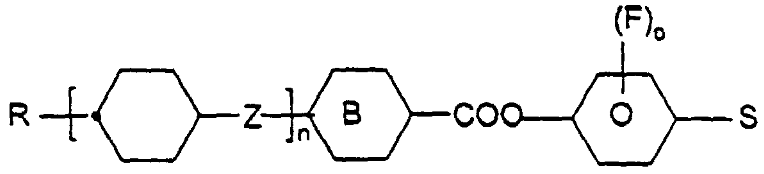

I

in which

R  is alkyl having up to 15 carbon atoms in which, in addition, one or 2 non-adjacent $CH_2$ groups may be replaced by -O- or -CH=CH-,

Z  is -COO-, -OCO-, $-CH_2CH_2-$ or a single bond,

S  is -CN, -NCS, -F, -Cl, $-CF_3$, $-OCHF_2$ or $-OCF_3$,

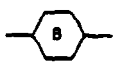 is 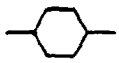, 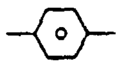 or 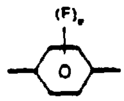,

p and o  are, independently of one another, 0, 1 or 2,

n  is 0 or 1,

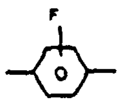

is 2-fluoro-1,4-phenylene or 3-fluoro-1,4-phenylene, and

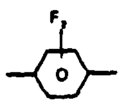

is 3,5-difluoro-1,4-phenylene or 2,3-difluoro-1,4-phenylene.

**5.** Electrooptical liquid-crystal system according to one of Claims 1-4, characterised in that the liquid-crystal mixture contains one or more compounds of the formula II

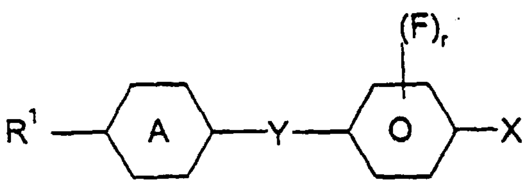

II

in which

$R^1$ is $R^2$ or

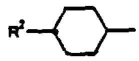 ,

$R^2$ is an alkyl group having 1-15 carbon atoms in which, in addition, one or two non-adjacent $CH_2$ groups may be replaced by -O-, -CO- and/or -CH=CH-,

r is 0, 1 or 2,

Y is a single bond, $-CH_2CH_2-$ or -OOC-,

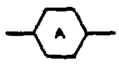 is 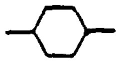 or 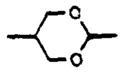 ,

and

X is -CN, -NCS, -F, -Cl, $CF_3$, $-OCHF_2$ or $-OCF_3$ and

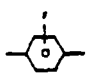 and 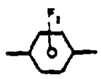

are as defined in Claim 4.

**6.** Electrooptical liquid-crystal system according to one of Claims 1-5, characterised in that the mixture has a dielectric anisotropy $\Delta\varepsilon$ of > 3.

**7.** Electrooptical liquid-crystal system according to one of Claims 1-6, characterised in that the mixture is based on compounds which have a dielectric anisotropy $\Delta\varepsilon$ of $\leq$ 20.

**8.** Electrooptical liquid-crystal system according to one of Claims 1-7, characterised in that the liquid-crystal mixture contains at least one pleochroic dye and/or at least one chiral dopant.

**9.** Electrooptical liquid-crystal system according to at least one of Claims 1-8, characterised in that the proportion by weight of compounds which simultaneiously fulfil conditions (i) and (ii), i.e. which have

(i) an optical anisotropy of $0.09 \leq \Delta n \leq 0.20$ and

(ii) a dielectric anisotropy $\Delta\varepsilon$ of $\leq$ 20,
is not less than 60 %

**10.** Use of a liquid-crystal mixture according to one of Claims 1-9 in an NCAP, PDLC or PN system.

**11.** Use of an electrooptical system according to at least one of Claims 1-9 for large-area display systems, architectural applications or for motor vehicles.

**12.** Use of an electrooptical system according to at least one of Claims 1-9 for GH display systems, matrix displays having a high information content, projection systems or switches.

## Revendications

**1.** Système électro-optique à cristaux liquides

- contenant entre 2 électrodes, le cas échéant déposées sur des plaques substrats, un mélange de cristaux liquides diélectriquement positif et un autre milieu optiquement transparent,
- dont les molécules de cristaux liquides présentent à l'état non excité une orientation irrégulière,
- dans lequel une des indices de réfraction du mélange de cristaux liquides correspond essentiellement à l'indice de réfraction de la matrice $n_M$ et/ou dans lequel le quotient de la masse du mélange de cristaux liquides et de la masse du milieu optiquement transparent est égal à 1,5 ou plus,
- présentant dans l'un des deux états d'excitation une transmission réduite par rapport à l'autre état, indépendamment de la polarisation de la lumière incidente,

caractérisé
en ce que le mélange de cristaux liquides est à base de composés à cristaux liquides simples qui présentent une biréfringence moyenne

$$0{,}09 \leq \Delta n \leq 0{,}20 \ (20\ °C, 589\ nm),$$

en ce que la proportion massique de ces composés à cristaux liquides dans le mélange de cristaux liquides est supérieure à 80 % et la proportion massique de composés à cristaux liquides présentant l'un des éléments structurels (1) à (9) suivants :

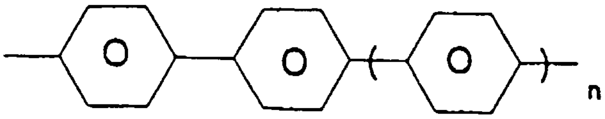

(1)

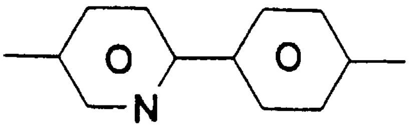

(2)

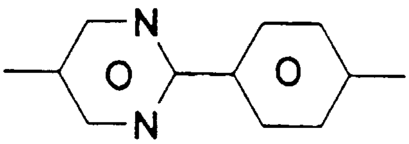

(3)

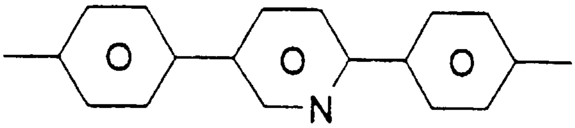

(4)

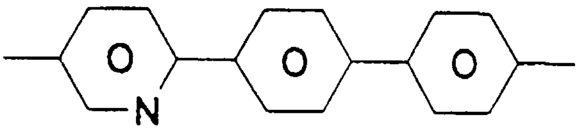

(5)

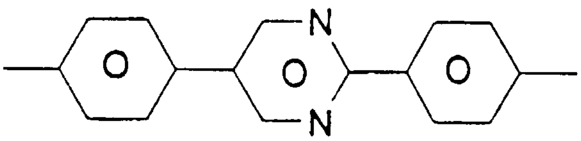

(6)

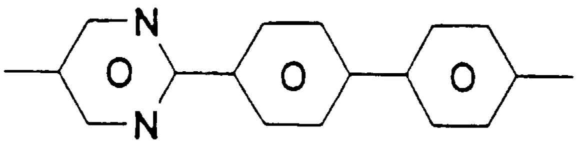

(7)

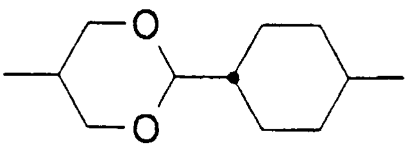

(8)

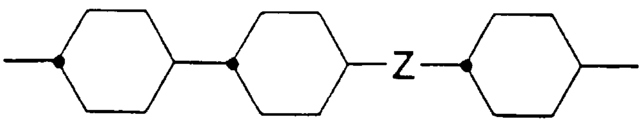

(9)

dans lesquels n vaut 0 ou 1 et Z représente -COO-, -OCO-, $-CH_2O-$ ou $-C_2H_4$, dans les mélanges de cristaux liquides est inférieure à 10 %.

**2.** Système électro-optique à cristaux liquides selon la revendication 1, caractérisé en ce que la proportion massique

des composés à cristaux liquides présentant une biréfringence moyenne dans le mélange de cristaux liquides est d'au moins 85 %.

3. Système électro-optique à cristaux liquides selon l'une au moins des revendications 1 et 2, caractérisé en ce que le mélange de cristaux liquides contient plus de 40 pour cent en masse de composés présentant une biréfringence comprise dans l'intervalle $0{,}11 \leq \Delta n \leq 0{,}17$ à 20 °C et 589 nm.

4. Système électro-optique à cristaux liquides selon l'une au moins des revendications 1 à 3, caractérisé en ce que le mélange de cristaux liquides contient au moins un composé ester de la formule I

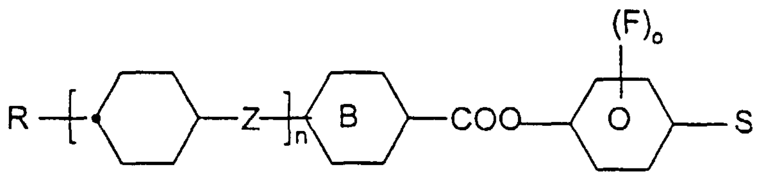

dans laquelle

| | |
|---|---|
| R | est un alkyle avec jusqu'à 15 atomes de C, un ou deux groupes $CH_2$ non voisins pouvant également être remplacés par -O- ou -CH=CH-, |
| Z | est -COO, -OCO-, $-CH_2CH_2-$ ou une liaison simple, |
| S | est -CN, -NCS, -F, -Cl, $CF_3$, $-OCHF_2$ ou $OCF_3$, |

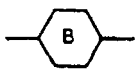 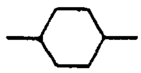 , 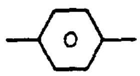 ou 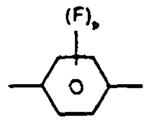

| | |
|---|---|
| p et o | valent indépendamment l'un de l'autre 0, 1 ou 2, |
| n | vaut 0 ou 1, |

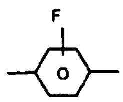

est 2-fluoro-1,4-phénylène ou 3-fluoro-1,4-phénylène, et

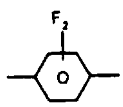

est 3,5-difluoro-1,4-phénylène ou 2,3-difluoro-1,4-phénylène

5. Système électro-optique à cristaux liquides selon l'une des revendications 1 à 4, caractérisé en ce que le mélange de cristaux liquides contient un ou plusieurs composés de la formule II

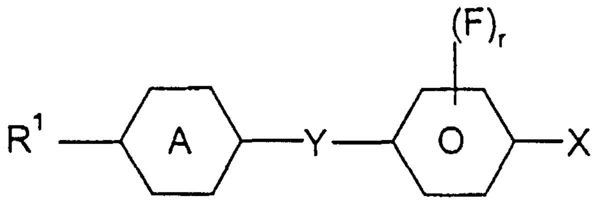

II

dans laquelle

$R^1$ est $R^2$ ou

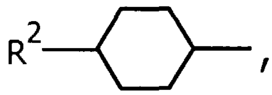

$R^2$ est un groupe alkyle ayant de 1 à 15 atomes de C, un ou deux groupes $CH_2$ non voisins pouvant également être remplacés par -O-, -CO- et/ou -CH=CH-,
r vaut 0, 1 ou 2,
Y est une liaison simple, $-CH_2CH_2-$ ou -OOC-,

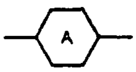 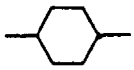 ou 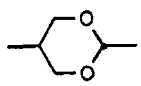

et
X est -CN, -NCS, -F, -Cl, $CF_3$, $-OCHF_2$ ou $-OCF_3$,
et la signification de

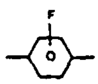

et de

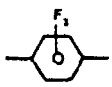

est donnée dans la revendication 4.

**6.** Système électro-optique à cristaux liquides selon l'une des revendications 1 à 5, caractérisé en ce que le mélange présente une anisotropie diélectrique $\Delta\varepsilon > 3$.

**7.** Système électro-optique à cristaux liquides selon l'une des revendications 1 à 6, caractérisé en ce que le mélange est à base de composés présentant une anisotropie diélectrique $\Delta\varepsilon \leq 20$.

**8.** Système électro-optique à cristaux liquides selon l'une des revendications 1 à 7, caractérisé en ce que le mélange de cristaux liquides contient au moins un colorant pléochroïque et/ou une substance dopante chirale.

**9.** Système électro-optique à cristaux liquides selon l'une au moins des revendications 1 à 8, caractérisé en ce que la proportion massique des composés qui remplissent simultanément les conditions (i) et (ii), c'est-à-dire qui présentent

(i) une anisotropie optique de $0{,}09 \leq \Delta n \leq 0{,}20$ et
(ii) une anisotropie diélectrique $\Delta\varepsilon \leq 20$,
n'est pas inférieure à 60 %.

**10.** Utilisation d'un mélange de cristaux liquides selon l'une des revendications 1 à 9 dans un système NCAP, PDLC ou PN.

**11.** Utilisation d'un système électro-optique selon l'une au moins des revendications 1 à 9 pour des systèmes d'affichage de grande surface, pour des applications architectoniques ou pour des véhicules automobiles.

**12.** Utilisation d'un système électro-optique selon l'une au moins des revendications 1 à 9 pour des systèmes d'affichage GH, des afficheurs matriciels à teneur en informations élevée, des systèmes de projection ou des commutateurs.